Europäisches Patentamt

European Patent Office

Office européen des brevets

(11) Publication number: **0 178 945**
**B1**

# EUROPEAN PATENT SPECIFICATION

(45) Date of publication of patent specification: **30.03.88**

(51) Int. Cl.⁴: **A 23 L 2/26**

(21) Application number: **85307543.0**

(22) Date of filing: **18.10.85**

(54) **Methods for producing highly alkaline drinks.**

(30) Priority: **18.10.84 JP 219464/84**

(43) Date of publication of application:
**23.04.86 Bulletin 86/17**

(45) Publication of the grant of the patent:
**30.03.88 Bulletin 88/13**

(84) Designated Contracting States:
**DE FR GB NL SE**

(56) References cited:
**EP-A-0 030 073**
**DE-A-2 705 433**

(73) Proprietor: **Suzuki, Katsumi**
**28-25 Kitakose Kose-cho**
**Kameoka Kyoto 621 (JP)**

(72) Inventor: **Suzuki, Katsumi**
**28-25 Kitakose Kose-cho**
**Kameoka Kyoto 621 (JP)**

(74) Representative: **Bass, John Henton et al**
**REDDIE & GROSE 16 Theobalds Road**
**London WC1X 8PL (GB)**

Courier Press, Leamington Spa, England.

# 0 178 945

**Description**

The present invention relates to methods for producing health drinks from clay, and more particularly, to methods for producing highly alkaline drinks for improving and keeping health, wherein the material is obtained from clay.

It is generally known that an alkaline drink is good for health. People drink it for keeping their health or when they suffer from any ailment, they are advised to take it for improving their bad health. In fact, various kinds of health foods and drinks are becoming popular, and available in the market. In the case of an alkaline drink it is obtained from springs or wells as a natural water. Sometimes it is condensed at the producers' factory. However, the obtained alkaline drink has a low alkalinity. Unless people take it for a long time, it will not be effective to serve the purposes, such as health-keeping and beauty-keeping.

It is generally accepted that there is no specially effective medicine for curing pregnant women's morning sickness and people's feeling for vomiting from autointoxication. For such ailments a better choice is actually to take a tranquiliser, or to give an intravenous drip to the patient. However, this is not a perfect treatment to cure the patient of his pain.

The inventor has been engaged in ceramic art for a long time, and familiarised himself with clay and ceramic. Accidentally he has invented a method of producing a drinking water containing a high percentage of alkali with the use of clay. However, it has been proved that the new water has an effect on pregnant women's morning sickness, general autointoxication, alcoholic intoxication, chronic melancholy, and poor appetite.

According to one aspect of the present invention, there is provided a method for producing a highly alkaline drink, the method comprising:

forming a heat-proof clay mass;

forming a mud from clay and water;

applying the mud to the mass;

allowing the mud-covered mass to dry;

heating the muddy mass at a temperature of not lower than 750°C;

placing the heating mass into contact with charcoal or wood so that at least part of it is incinerated;

submerging the heated mass in water before it cools below 500°C; and

removing the mass and floating pieces from the water.

According to another aspect of the present invention, there is provided a method for producing highly alkaline drink, the method comprising:

heating clay placed in contact with charcoal or wood at a temperature of not lower than 750°C so that at least part of the charcoal or wood is incinerated;

submerging the heated clay in water before it cools below 500°C; and

removing solid pieces from the water.

For the clay usable for the present invention, the clay for making pottery can be effectively used. In general the clay for this use is divided into two types: a primary clay and a secondary clay. The primary clay is obtained near the country rock, and the secondary clay is obtained from deposits occuring naturally as a result of flowing primary clay, away from the country rock. The secondary clay often contains organic matter, such as carbonised plants, and ferric oxide, because of the latter content the clay looks red. This accounts for its name of red clay. There is another type of clay, commonly called *gairome* clay, which is an intermediate between the primary clay and the secondary clay. The above-mentioned three kinds of clay can be selectively used for the present invention. Table (1) shows the chemical compositions of clay in general use for pottery.

In this specification the clay includes a primary clay, such as kaolin, a secondary clay, such as red clay, and intermediates therebetween. It has been found out that red clay is more effective than any other.

Clay can be obtained from place to place in the country, but the qualitative analysis has ascertained that red clay contains not only iron oxides but also mica, montmorillonite, and other similar adsorptive minerals.

The heat-proof clay mass mentioned above is obtained by moulding *kibushi* clay (containing clay containing carbonised plant), porcelain or ceramic in such shapes as to allow heat to pass therethrough when the masses are piled in a stack in the furnace, and to have a vast surfacial area and stability when they are overlaid.

The clay mass is heated at a temperature of not lower than 750°C. This is because if it is heated below 750°C, the resulting ash content will fail to be attached to the surface of clay. A preferred range is 800°C to 1000°C. As a result of the repeated experiments this range has been selected, because when the mass is heated at 800°C or more, the ash content is well attached to the clay in a short time. However, it is impracticable to heat it at more than 1000°C when the furnace is a small, handy type. The fuel efficiency will be reduced.

In addition, charcoal and wooden pieces are often referred to in this specification. The charcoal and the wooden piece are obtained from an oak tree, a cherry tree, a cypress tree, a *kunugi* (a kind of oak) or any other kinds of deciduous trees suitable for producing charcoal. However, the source of the charcoal and wooden pieces is not limited thereto. The ashes mentioned in this specification is obtained by burning trees, and they exclude the ashes obtained by burning grasses or straws.

2

The invention will be more particularly described by way of examples:

### Example (1)

Clay used for pottery was moulded in a cylinder having an outside diameter of 110 cm, an inside diameter of 80 cm and a height of 50 cm, and allowed to dry for 2 days. Commercial red clay was made muddy by adding water at the ratio of 1.9 kg of water to 1.0 kg of clay. The cylindrical clay mass was wholly covered with the muddy red clay by means of a brush. The mud film has a thickness of about 1 mm. The mud-covered clay mass was allowed to dry in the room for 24 hours. In this way 100 pieces of masses were produced. The mud-covered clay masses were piled in a stack in an electric furnace, and heated for about 5 hours. When their surfacial temperatures reached about 850°C, 5 kg of pine charcoal was placed in contact with the individual clay masses. After about 10 minutes when the charcoal became red, 50 pieces were taken out one after another, and put into the water in a vessel. The water had had a room temperature, and its amount was 15 litres. When all of them were put, the temperature of the water reached 100°C, that is, the boiling point. The other 50 pieces were put in another vessel, and left for about one hour as they were. When the temperature of the water lowered to 40°C to 50°C, the clay masses were picked up from the vessel. The water in the vessel contained grey floating matter, and looked milky-white. The water was roughly filtered by means of cotton cloth, and then filtered by means of a nylon mat. The filtrate was highly alkaline.

The filtrate was clearly transparent with no colour or visible floating matter through a transparent container.

### Example (2)

Instead of the red clay in Example (1) white clay was used, which had the chemical composition shown in Table (5). The other conditions were the same as those in Example (1).

The filtrate had no visible floating matter, and the taste was not different from that of the water of Example (1).

### Example (3)

Instead of the pine charcoal in Example (1), 5 kg of a pine piece was used, and the heating temperature was raised to about 900°C. Ten minutes after the wood pieces are burnt to ashes, the clay masses were taken out of the furnace. The other conditions were the same as those for Example (1).

The obtained water was clear enough to observe no floating matter therein, and tasted as pure water does.

### Example (4)

Charcoal was pulverised to grain-sizes ranging from 3 mm to 5 mm, and the same red clay as the one used in Example (1) was combined with the pulverised charcoal at the ratio of 10 (clay) to 2 (charcoal) by weight. The mixture was heated at about 800°C. The other conditions were the same as those for Example (1).

The obtained water was clear enough to observe no visible floating matter therein, such as ashes, and tasted as pure water does.

Table (3) shows the pH value, ash content, and iodine ions of the water obtained from each of the Examples (1) to (4). The analysis of the ash content was conducted by vaporising the specimen on a tray so as to solidify thereon, heating it at 600°C in an electric furnace for three hours, and measuring the weight of the residue. The quality of the ash content after filtration was analysed through the measurement of the ash content remaining on a filter paper with pore diameter of 7 μ.

Table (4) shows the results of qualitative analysis with respect to the metal contents for the water obtained from each example. The metal content has been identified by luminous analyses.

The water obtained under the present invention has no colour (transparent), odour or taste. As shown in Tables (3), (4) and (5), the water exhibits a high alkalinity with high pH values, and contains an ash content in addition to small portions of Na, Si and Mg. It has been also ascertained that very small portions of Fe and Al are respectively contained.

The water obtained was tested on its effects upon man and animals, the results of which are described below. The tests were carried out on many cases, and the following are only examples of them:

### TEST (1)

The patient was a three-year-old female dog, which used to vomit badly after its childbirth, and suffer from poor appetite, so that it became very weak. When the water was to be tested on the dog it had given birth to ten baby dogs. As usual it was suffering from vomiting and had poor appetite. The veterinarian told the keeper that his pet dog was going to die.

The keeper made her drink the water from his palm. Next, he poured 100 cc of the water in a plate, and placed it beside her. She drank it willingly. On that day her appetite slightly improved. From the next day 45 cc of the water was admixed with each meal. In two days she was recovered from the weakness.

## TEST (2)

The patient was a man of fifty-two, who was a director of a company. He had been suffering from bad liver. The sympton was that he lost continuous energy, looked pale, and suffered from insomnia because of his frequent coughing in the night. He consulted with his doctor. The tomogram uncovered that his liver had a scar of about 5 mm in length, and the doctor advised him to enter hospital immediately in case the scar was likely to develop into a malignant tumour. He was also diagnosed that he suffered from B-type hepatitis. The patient did not follow the doctor's advice, but tried to drink the water of the invention.

Every morning when getting up, he drank a cup of water, and after breakfast, he drank half of the cup. He went to work every day, and when getting home, he drank a cup of it. Before going to bed, he drank half of the cup. Totally he drank about 540 cc a day. A month later the cursed sympton had completely disappeared. Six months later he was examined by a doctor. The medical check told that the liver had no scar, and that the B-type hepatitis had been cured of. The doctor was surprised at his rapid recovery from the incurable illness, and wanted to know why it happened to him. While he was drinking the water, he suffered from no harmful side effects. He had become a tough business man.

## TEST (3)

The patient was a woman of fifty-six, who was the principal of a kindergarten. She had been suffering from the heart disease, and became unconscious because of sudden difficult breathing, which happened a few times in a month. It was difficult for her to play with the children in her kindergarten. She breathed with much difficulty only a few steps. She went to her doctor, who told her that her heart had become worse, advising her to carry nitroglycerin with her. The diagnosis also uncovered that she had a raised value of cholesterol in her blood. .

Immediately after being so diagnosed she began to drink the water of the invention. Every morning when getting up, and every evening when going to bed, she drank a cupful each. In the daytime she drank a cupful when she wanted it. Totally she drank 540 cc a day.

She had had no fit in her heart for three months since she began to drink the water. She was energetic enough to play with naughty children, during which she was safe from her habitual difficult breathing. No harmful side effects infringed her. After three months after she began to drink the water, she went to the doctor, and was diagnosed that the value of cholesterol had reduced to a normal state, and the electrocardiogram showed no abnormality of her heart.

Table (5) shows the results of quantitative analysis of Na, Cl, Si and Mg contained in the water produced under the present invention.

Table (1) shows the chemical composition of clays generally known as "clay for pottery", which data was obtained by analysed four specimens, and which could be used in methods according to the invention.

In contrast to Table (1) Table (2) shows the chemical composition of the clay used for carrying out the examples of the present invention previously described, which data was obtained by analysing two specimens.

### TABLE (1)

| Chemical Composition | Spc.(1) | Spc.(2) | Spc.(3) | Spc.(4) |
|---|---|---|---|---|
| | % | % | % | % |
| Silica ($SiO_2$) | 47.8 | 49.5 | 48.1 | 50.0 |
| Alumina ($Al_2O_3$) | 36.1 | 34.4 | 34.8 | 33.9 |
| Ferric Oxide ($Fe_2O_3$) | 0.4 | 1.3 | 1.0 | 1.3 |
| Calcium Oxide (CaO) | 1.8 | 0.5 | 0.5 | 0.5 |
| Magnesia (MgO) | 1.0 | 0.3 | 0.4 | 0.1 |
| Potassium Oxide ($K_2O$) | 0.5 | 0.6 | 0.9 | 0.8 |
| Sodium Oxide ($Na_2O$) | 0.2 | 0.6 | 0.2 | 0.2 |
| Weight Loss (1 g loss) | 12.4 | 12.9 | 14.3 | 16.1 |

[Note]
'Spc.' stand for specimen. Spc.(1) was obtained from a primary clay (kaolin). Spc.(2) was obtained from an intermediate (commonly called *gairome* clay). Spc.(3) and Spc.(4) were obtained from a secondary clay (*kibushi* clay).

### TABLE (2)

| Chemical Composition | Spc.(1) | Spc.(2) |
|---|---|---|
| | % | % |
| Silica ($SiO_2$) | 60.37 | 77.53 |
| Alumina ($Al_2O_3$) | 18.76 | 13.82 |
| Titan ($TiO_2$) | 0.90 | 0.34 |
| Ferric Oxide ($Fe_2O_3$) | 9.60 | 0.60 |
| Calcium Oxide (CaO) | 0.34 | 0.23 |
| Magnesia (MgO) | 0.73 | 0.32 |
| Potassium Oxide ($K_2O$) | 1.75 | 2.33 |
| Sodium Oxide ($Na_2O$) | 0.16 | 0.20 |
| Weight Loss (1 g loss) | 7.34 | 4.36 |

[Note]
Spc. Stands for specimen, and Spc.(1) is the red clay which was used in Examples (1), (3) and (4). Spc.(2) is white clay which was used in Example (2).

### TABLE (3)

| Items Specimens | pH | Ash Content (unfiltered) (mg/l) | Ash Content (filtered) (mg/l) | Iodide Ions (mg/l) |
|---|---|---|---|---|
| Spc.(1) | 10.6 | 81 | 78 | 0.5 or below |
| Spc.(2) | 8.2 | 75 | 70 | 0.5 or below |
| Spc.(3) | 10.1 | 81 | 75 | 0.5 or below |
| Spc.(4) | 9.5 | 76 | 68 | 0.5 or below |

[Note]
The Spc. stands for specimen, and the Spcs. (1) to (4) were obtained from Examples (1) to (4), respectively.

TABLE (4)

|  | Fe | Al | Ca | Cu | Na | K | Ba | Si | Mg | B |
|---|---|---|---|---|---|---|---|---|---|---|
| Spc.1 | tr | ++ | +++ | − | + | − | − | + | + | − |
| Spc.2 | tr | tr | +++ | − | + | − | − | + | + | − |
| Spc.3 | tr | ++ | +++ | − | ++ | − | − | ++ | + | − |
| Spc.4 | tr | + | +++ | − | + | − | − | + | + | − |

[Note]
The Spc. stands for specimen, and the Spcs. (1) to (4) were obtained from Examples (1) to (4), respectively.

The sign − shows that no element was identified, the sign tr shows that a trace of presence was observed, and the sign + shows that a small amount was detected. The sign ++ shows that the detected amount was more than that of sign +. Likewise, the sign +++ shows that the detected amount was more than that of the sign ++. The absolute amount of sign +, ++ and +++ is different with each element.

TABLE (5)

| Contents | Spc.(1) | Spc.(2) | Spc.(3) | Spc.(4) |
|---|---|---|---|---|
| Na (mg/l) | 5.9 | 5.9 | 5.4 | 5.8 |
| Ca (mg/l) | 16 | 11 | 14 | 11 |
| Si (mg/l) | 7.2 | 5.9 | 6.8 | 6.6 |
| Mg (mg/l) | 2.2 | 3.4 | 3.6 | 2.6 |
| Remains (mg/l) | 95 | 79 | 83 | 59 |

[Note]
Spc. stands for specimen, and Spcs. (1) to (4) were obtained from Examples (1) to (4), respectively.

Thus, it will be seen that the present invention provides methods for producing highly alkaline drinks at reduced costs, and with a simple facility.

**Claims**

1. A method for producing a highly alkaline drink, the method comprising:
forming a heat-proof clay mass;
forming a mud from clay and water;
applying the mud to the clay mass;
allowing the mud-covered clay mass to dry;
heating the muddy mass at a temperature of not lower than 750°C;
placing charcoal or wood into contact with the heating clay mass so that at least part of the charcoal or wood is incinerated;
submerging the heated clay mass in the water in a vessel, before the heated clay mass cools down below 500°C; and
removing the clay mass and floating matter from the water.

2. A method for producing a highly alkaline drink, the method comprising:
heating clay placed in contact with charcoal or wood at a temperature of not lower than 750°C so that at least part of the charcoal or wood is incinerated;
submerging the heated clay in the water in a vessel before it cools down below 500°C; and
removing floating matter from the water.

3. A method as defined in claim 1 or 2 wherein the clay is red clay.

4. A method as defined in claim 1 or 2 wherein the clay mass is heated at a temperature ranging from 800°C to 1000°C.

# 0 178 945

## Patentansprüche

1. Verfahren zur Herstellung eines Getränks hoher Alkalinität, mit den Schritten:
Formen einer hitzebeständigen Formmasse;
Formen eines Schlammes aus Ton und Wasser;
Aufbringen des Schlammes auf die Tonmasse;
Trocknenlassen der schlammbedeckten Tonmasse;
Erwärmen der schlammigen Masse auf eine Temperature nicht unter 750°C;
Inberührungbrigen von Holzkohle oder Holz mit der wärmenden Tonmasse, do daß zumindest ein Teil der Holzkohle oder des Holzes zu Asche verbrennt;
Eintauchen der erwärmten Tonmasse in das Wasser in einem Kessel, bevor die erwärmte Tonmasse auf unter 500°C abkühlt; und
Entfernen der Tonmasse und schwimmender Teile aus dem Wasser.

2. Verfahren zur Herstellung eines Getränks hoher Alkalinität, mit den Schritten:
Erwärmen des in Berührung mit Holzkohle oder Holz gebrachten Tons auf eine Temperatur nicht unter 750°C, so daß zumindest ein Teil der Holzkohle oder des Holzes zu Asche verbrennt;
Eintauchen des erwärmten Tons in das Wasser in einem Kessel, bevor der Ton unter 500°C abkühlt; und
Entfernen schwimmender Teile aus dem Wasser.

3. Verfahren nach Anspruch 1 oder 2, worin der Ton roter Ton ist.

4. Verfahren nach Anspruch 1 oder 2, worin die Tonmasse auf eine Temperatur im Bereich von 800°C—1000°C erwärmt wird.

## Revendications

1. Procédé pour produire un boisson de haute alcalinité, le procédé consistant:
à former une masse d'argile réfractaire;
à former une boue à partir d'argile et d'eau;
à appliquer la boue sur la masse d'argile;
à laisser sécher la masse recouverte de boue;
à chauffer la masse boueuse à une température non inférieure à 750°C;
à placer du charbon ou du bois en contact avec la masse chauffée de telle sorte qu'au moins une partie du charbon ou du bois soit incinérée;
à plonger la masse d'argile chauffée dans l'eau d'un récipient, avant que la masse d'argile chauffée ne se refroidisse au-des-sous de 500°C; et
à retirer la masse d'argile et la matière flottante de l'eau.

2. Procédé de production d'une boisson de haute alcalinité, le procédé consistant:
à chauffer de l'argile mise en contact avec du carbon ou du bois à une température non inférieure à 750°C, de telle sorte qu'au moins une partie de charbon ou du bois soit incinérée;
à plonger l'argile chauffée dans l'eau d'un récipient avant qu'elle ne se refroidisse au-dessous de 500°C; et
à retirer la matière flottante de l'eau.

3. Procédé tel que défini dans les revendications 1 ou 2, dans lequel l'argile est de l'argile rouge.

4. Procédé tel que défini dans les revendications 1 ou 2, dans lequel la masse d'argile est chauffée à une température allant de 800°C à 1000°C.